# EUROPEAN PATENT APPLICATION

(11) **EP 4 183 708 A1**
(43) Date of publication of application: **24.05.2023**
(21) Application number: 22208871.8
(22) Date of filing: 22.11.2022
(51) Int. Cl.: B65D 65/46, C08L 1/02, C08L 3/02, C08L 97/02

(54) **BIODEGRADABLE COMPOSITIONS AND METHODS FOR PRODUCING SAME**

(30) Priority: 23.11.2021 PT 2021117595; 05.08.2022 PT 2022118149
(71) Applicant: Planetpack-Packaging Industry, LDA, 3405-390 Seixo Da Beira (PT)
(72) Inventor: GARCIA LOPES, Vasco, SEIXO DA BEIRA (PT)
(74) Representative: Pereira da Cruz, Joao

(57) **Abstract**

Biodegradable compositions comprising cellulose fiber and starch, in a ratio of fiber:starch between 5:1 and 1:2 by weight, wherein the cellulose fiber is virgin fiber, lignocellulosic biomass, organic residues, primary sludge, or any combination thereof, are disclosed. Articles comprising the compositions and methods for producing thereof are also disclosed

## Description

### FIELD OF THE INVENTION

The present disclosure is directed to biodegradable compositions and their use, as e.g., plastic substitute for packages.

### BACKGROUND OF THE INVENTION

Single-use plastic products (SUPs) are used once, or for a short period of time, before being thrown away. The impacts of this plastic waste on the environment and our health are global and can be drastic. Single-use plastic products are more likely to end up in our seas than reusable options.

EU rules on single-use plastic products aim to prevent and reduce the impact of certain plastic products on the environment, in particular the marine environment, and on human health.

Patent US7556757B2 relates to a biodegradable composition for the preparation of table-ware, mulching film and package, which comprises: 2-6% by weight of starch; 35-45% by weight of plant powders; 20-30% by weight of calcium carbonate; 2-7% by weight of sorbitol; 7-13% by weight of polypropylene; 2-5% by weight of polyethylene; 2-6% by weight of coupling agent; 1-2% by weight of defoamer; 2-5% by weight of stearic acid; 2-6% by weight of stearate; 3-6% by weight of glycerin or epoxidized soybean oil; and 60-100 ppm photosensitizer.

Patent EP0773721B1 discloses compounds made from a starch suspension and a wax coating which is roasted in a basic mold. The coating is made from a wax composition comprising at least 50% wax and having a melt temperature of at least 40 ° C. The starch composition is preferably made by a process which includes 5-75% of a starch derivative having reduced dilatability at increased temperatures as compared to the native starch.

Patent EP2013280B1 relates to a novel biodegradable additive polymer composition useful for the preparation of biodegradable plastic products which comprises of a mixture of (i) a polymer selected from polyethylene, polypropylene, poly styrene, poly vinyl chloride or a mixture thereof (ii) cellulose (iii) amides (iv) nutrients selected from blue green algae and / or yeast and (v) water.

Accordingly, there is an unmet need to develop cost effective, innovative and sustainable products and materials as plastic alternatives, in circular economy, comprising minimum amount of components and especially components from waste residues.

### SUMMARY OF THE INVENTION

In one aspect of the disclosure, there is provided a biodegradable composition comprising cellulose fiber and starch, in a ratio of fiber:starch between 5:1 and 1:2 by weight, wherein: the cellulose fiber is virgin fiber, lignocellulosic biomass, organic residues, primary sludge, or any combination thereof, and the starch is wheat, rice, corn, potato, cassava, or any combination thereof.

In a further embodiment, the biodegradable composition comprises between 10% and 60% weight per weight (w/w) of the starch.

In a further embodiment, the biodegradable composition comprises between 20% and 90% (w/w) of the cellulose fiber.

In a further embodiment, the biodegradable composition comprises an ash content between 4% and 30% (w/w).

In a further embodiment, the biodegradable composition further comprises between 5% and 30% (w/w) of an aluminum silicate.

In a further embodiment, the biodegradable composition further comprises between 5% and 30% (w/w) of titanium dioxide.

In a further embodiment, the biodegradable composition further comprises between 0.5% and 10% (w/w) of calcium carbonate.

In a further embodiment, the biodegradable composition further comprises a natural additive selected from the group consisting of: a coloring agent, a filler, a release agent, a binder, and any combination thereof.

In a further embodiment, the biodegradable composition further comprises between 10% and 40% (w/w) of water.

In another aspect of the disclosure, there is provided an article comprising the biodegradable composition according to the present disclosure, wherein the article has a biodegradation rate between 2 weeks and 3 months and is biodegradable or bioerodible in soil, water, or both.

In a further embodiment, the article is a single-use article selected from the group comprising: a bottle, a container, a package, a cap, a disposable medical equipment, and any combination thereof.

In another aspect of the disclosure, there is provided a method for producing the article according to the present disclosure, the method comprising: a) providing a template comprising a wall defining a cavity, wherein a shape of the article is at least partially predetermined by a shape of the wall; and b) contacting the template with the biodegradable composition according to the present disclosure, so as to at least partially fill the cavity, wherein the contacting is carried out by casting, injection molding, extrusion, spinning, compression, blowing and/or thermoforming and/or any combination thereof, thereby obtaining the article.

In a further embodiment, the contacting is injection molding performed at a temperature between 80 °C and 130 °C, and at a pressure between 5 bar and 10 bar.

In another aspect of the disclosure, there is provided a use of the biodegradable composition according to the present disclosure, in food, cosmetic, medicine, chemical-, or electronic-product packaging, or any combination thereof.

In another aspect of the disclosure, there is provided a use of the article according to the present disclosure, in food-, cosmetic-, medicine-, chemical-, or electronic-product packaging, or any combination thereof.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

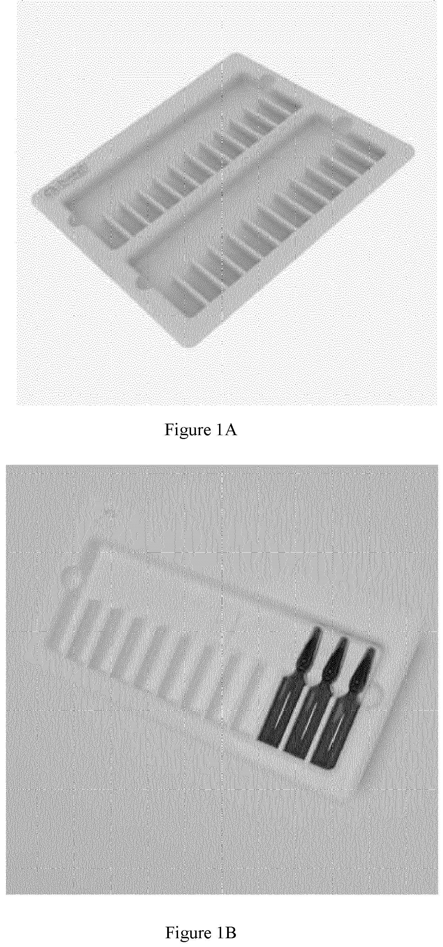

Figures 1A-B are images of an exemplary sustainable single-use package according to the present disclosure.

### DETAILED DESCRIPTION OF THE INVENTION

The present disclosure is directed to a biodegradable composition comprising a cellulose fiber and starch. In some embodiments, the cellulose fiber is virgin fiber, lignocellulosic biomass, organic residues, primary sludge, or any combination thereof, and the starch is wheat, rice, corn, potato, cassava, or any combination thereof. In some embodiments, the cellulose fiber is recycled fiber. In some embodiments, the cellulose fiber is derived from waste residues. In some embodiments, the starch is of industrial use.

The present disclosure is based, in part, on the finding that the use of lignocellulosic biomass, organic residues, primary sludge, or any combination thereof, reduces the need of using virgin fibers, thereby reducing costs and providing a sustainable and ecologic alternative.

The present disclosure is directed to an article comprising the biodegradable composition described herein. The present disclosure is based, in part, on the finding that articles according to the present disclosure have an increased biodegradation rate, compared to control articles. The present disclosure is also based on the finding that articles according to the present disclosure have a reduced cost.

The present disclosure is based, in part, on the finding that an article can be custom-made, according to the desired use of the article, by choosing the type of cellulose fiber used.

The present disclosure is directed to a method for producing the article described herein.

In some embodiments, the composition and article according to the present disclosure is water-soluble. Water-soluble compositions and articles according to the present disclosure have a water solubility of more than about 1 mg/mL, more than about 10 mg/mL, more than about 20 mg/mL, more than about 25 mg/mL, more than about 50 mg/mL, more than about 100 mg/mL, or more than about 1 g/mL, including any range therebetween. Each possibility represents a separate embodiment of the present disclosure.

In some embodiments, the term "biodegradable" describes a composition or article which can decompose under environmental condition(s) into breakdown products. Such environmental conditions include, for example, exposure to water, open field cultivation conditions such as soil microbiome, rhizosphere, temperature between 0 and 50°C, UV radiation, irrigation, hydrolysis (decomposition via hydrolytic cleavage), enzymatic catalysis (enzymatic degradation), and mechanical interactions. This term typically refers to composition/article, which is capable of decomposition under these conditions, such that at least 50 weight percent of the composition/article decomposes within a time period shorter than two years.

In some embodiments, the term "biodegradable" as used in the context of embodiments of the disclosure, also encompasses the term "bioerodible", which describes a composition/article which decomposes under environmental conditions into smaller fractions, thus substantially losing its structure and/or mechanical properties. In some embodiments, the term "bioerosion" refers to erosion of the composition/article initiated by microorganisms, and resulting in at least partial degradation of the coating/article.

The present disclosure is based, in part, on the finding that compositions and articles according to the present disclosure comprising virgin fiber, lignocellulosic biomass, organic residues, primary sludge, or any combination thereof, are devoid of toxic residues.

### Composition

According to some embodiments, the present disclosure provides a biodegradable composition comprising cellulose fiber and starch, in a ratio of fiber: starch between 5:1 and 1:2 by weight. In some embodiments, the composition comprises cellulose fiber and starch, in a ratio of fiber:starch between 5:1 and 1:2, between 4:1 and 1:2, between 3:1 and 1:2, between 2:1 and 1:2, between 1:1 and 1:2, between 5:1 and 3:1, between 5:1 and 2:1, between 5:1 and 1:1, between 4:1 and 3:1, between 4:1 and 2:1, between 4:1 and 1: 1,or between 3:1 and 1:1 by weight, including any range therebetween. Each possibility represents a separate embodiment of the present disclosure.

In some embodiments, the biodegradable composition comprises at least 30%, at least 40%, at least 50%, at least 60%, or at least 70%, of polysaccharides, including any value therebetween. Each possibility represents a separate embodiment of the present disclosure.

In some embodiments, the biodegradable composition comprises between 40% and 98% of polysaccharides. In some embodiments, the biodegradable composition comprises between 50% and 98% of polysaccharides. In some embodiments, the biodegradable composition comprises between 60% and 98% of polysaccharides. In some embodiments, the biodegradable composition comprises between 80% and 98% of polysaccharides.

The present disclosure is based, in part, on the surprising finding that such compositions comprising cellulose fiber and starch, in a specific ratio of fiber:starch as disclosed hereinabove, are characterized by an improved biodegradation rate, thermal stability and/or improved mechanical property as compared to a control composition comprising different components or different ratios.

The present disclosure is based, in part, on the surprising finding that such compositions comprising cellulose fiber and starch, in a specific ratio of fiber:starch as disclosed hereinabove, are suitable for molding. In some embodiments molding is injection molding.

In some embodiments, the cellulose fiber is virgin fiber, lignocellulosic biomass, organic residues, primary sludge, or any combination thereof.

As used herein, the term "cellulose" refers to an organic compound containing a linear chain of D-glucose units linked via β- (1,4) glycosidic bonds.

In some embodiments, cellulose fibers are organic fibers. In some embodiments, cellulose fibers are natural fibers derived from plant-based raw materials. In some embodiments, natural cellulose fibers refer to fibers that haven't undergone a chemical modification of the cellulose polymer structure. Paper pulp is an example of a mixture of natural cellulose fibers. Natural cellulose fibers can be separated from plant-based or wood-based raw materials in chemical or mechanical pulping processes. Pulp compresses the cellulosic fiber material. Natural wood-based fibers are composed of fibrils of cellulose in a matrix of hemicellulose and lignin.

In some embodiments, cellulose fiber comprises a virgin or recycled plant material, or a combination thereof. Cellulose plant-based fibers according to the present disclosure may be derived from wood or from non-wood materials. Non-limiting examples or a plant according to the present disclosure is a hardwood such as birch, poplar, poplar, alder, eucalyptus, acacia, or a conifer such as spruce, pine, fir larch, larch, hemlock. In some embodiments, the cellulose fibers may be derived from other non-wood plants, such as cotton, hemp, flax, sisal, jute, kenaf, bamboo, peat, coconut. Non-wood cellulose fibers may be derived from agricultural residues, grass, straw, leaves, bark, seeds, hulls, flowers, vegetables or fruits. In some embodiments, the cellulose fibers are derived from paper residues.

In some embodiments, the cellulose fiber is virgin fiber, lignocellulosic biomass, organic residues, primary sludge, or any combination thereof. In some embodiments, primary sludge refers to pulp and paper mill sludge.

A "fiber" as used herein, is meant a fine cord of fibrous material composed of two or more filaments twisted together. By "filament" is meant a slender, elongated, threadlike object or structure of indefinite length, ranging from microscopic length to lengths of a mile or greater. In some embodiments, the term "fiber" does not encompass unstructured aggregates or precipitates.

In some embodiments, the composition comprises between 20% and 90%, between 25% and 90%, between 30% and 90%, between 35% and 90%, between 40% and 90%, between 20% and 70%, between 25% and 70%, between 30% and 70%, between 35% and 70%, between 40% and 70%, between 20% and 60%, between 25% and 60%, between 30% and 60%, between 35% and 60%, between 40% and 60%, between 20% and 50%, between 25% and 50%, between 30% and 50%, between 35% and 50%, or between 40% and 90%, weight per weight (w/w) of the cellulose fiber, including any range therebetween. Each possibility represents a separate embodiment of the present disclosure.

In some embodiments, the composition comprises between 20% and 40%, between 25% and 40%, between 30% and 40%, between 35% and 40%, between 20% and 35%, or between 25% and 35% of the primary sludge, including any range therebetween. Each possibility represents a separate embodiment of the present disclosure.

In some embodiments, the composition comprises between 30% and 60%, between 35% and 60%, between 40% and 60%, between 45% and 60%, between 30% and 50%, between 35% and 50%, between 40% and 50%, or between 45% and 50%, of the virgin fiber, including any range therebetween. Each possibility represents a separate embodiment of the present disclosure.

In some embodiments, the starch is wheat, rice, corn, potato, cassava, or any combination thereof. In some embodiments, the starch is starch for industrial use.

As used herein "starch of industrial use" refers to non-food grade starch, low purity starch or derivatives thereof not suitable to be consumed in a subject's diet.

In some embodiments, the composition comprises between 10% and 60% (w/w),

between 15% and 60% (w/w), between 20% and 60% (w/w), between 25% and 60% (w/w), between 15% and 40% (w/w), between 20% and 40% (w/w), between 25% and 40% (w/w), between 15% and 30% (w/w), between 20% and 30% (w/w), or between 25% and 30% (w/w) of the starch, including any range therebetween. Each possibility represents a separate embodiment of the present disclosure.

In some embodiments, the biodegradable composition comprises an ash content between 4% and 30% (w/w), between 5% and 30% (w/w), between 6% and 30% (w/w), between 10% and 30% (w/w), between 15% and 30% (w/w), between 4% and 25% (w/w), between 5% and 25% (w/w), between 6% and 25% (w/w), between 10% and 25% (w/w), between 15% and 25% (w/w), between 4% and 20% (w/w), between 5% and 20% (w/w), between 6% and 20% (w/w), between 10% and 20% (w/w), between 15% and 20% (w/w), between 4% and 10% (w/w), between 5% and 10% (w/w), between 6% and 10% (w/w), between 4% and 8% (w/w), or between 5% and 8% (w/w), including any range therebetween. Each possibility represents a separate embodiment of the present disclosure.

In some embodiments, a biodegradable composition according to the present disclosure, comprising virgin fiber, comprises an ash content between 4% and 10% (w/w), between 5% and 10% (w/w), between 6% and 10% (w/w), between 4% and 8% (w/w), or between 5% and 8% (w/w), (w/w), including any range therebetween. Each possibility represents a separate embodiment of the present disclosure.

In some embodiments, the composition further comprises between 5% and 30% (w/w), between 10% and 30% (w/w), between 15% and 30% (w/w), between 20% and 30% (w/w), between 5% and 25% (w/w), between 10% and 25% (w/w), between 15% and 25% (w/w), between 5% and 20% (w/w), between 10% and 20% (w/w), or between 15% and 20% (w/w) of an aluminum silicate, including any range therebetween. Each possibility represents a separate embodiment of the present disclosure. Non-limiting examples of suitable aluminum silicates according to the present disclosure include clay minerals such as halloysite, kaolinite pyrophyllite, talc, illite, montmorillonite (smectite), chlorite, and any combination thereof. The present disclosure is based, in part, on the surprising finding that the use of an aluminum silicate as described hereinabove, allows to reduce the amount of cellulose fiber used, while maintaining the desired characteristics and properties of the composition (such as consistency and homogeneity).

In some embodiments, the composition further comprises between 5% and 30% (w/w), between 10% and 30% (w/w), between 15% and 30% (w/w), between 20% and 30% (w/w), between 5% and 25% (w/w), between 10% and 25% (w/w), between 15% and 25% (w/w), between 5% and 20% (w/w), between 10% and 20% (w/w), or between 15% and 20% (w/w) titanium dioxide, including any range therebetween. Each possibility represents a separate embodiment of the present disclosure. The present disclosure is based, in part, on the finding that the use of titanium dioxide in the composition, gives to the composition a white color. In some embodiments, compositions comprising virgin cellulose fiber are characterized by a white color while being devoid of titanium dioxide.

In some embodiments, the composition further comprises between 0.5% and 10%, between 0.9% and 10%, between 1% and 10%, between 5% and 10%, between 0.5% and 5%, between 0.9% and 5%, or between 1% and 5% of calcium carbonate, including any range therebetween. Each possibility represents a separate embodiment of the present disclosure.

In some embodiments, the composition further comprises a natural additive selected from the group consisting of: a coloring agent, a filler, a release agent, a binder, and any combination thereof.

In some embodiments, the composition further comprises between 10% and 40% (w/w), between 12% and 40% (w/w), between 15% and 40% (w/w), between 20% and 40% (w/w), comprises between 10% and 30% (w/w), between 12% and 30% (w/w), between 15% and 30% (w/w), between 20% and 30% (w/w), comprises between 10% and 20% (w/w), between 12% and 20% (w/w), or between 15% and 20% (w/w) of water, including any range therebetween. Each possibility represents a separate embodiment of the present disclosure. In some embodiments, water is used as a plasticizer. As used herein, plasticizer refers to a liquid, solid or semi-solid substance, which when added to a material (composition) makes this material softer, more elastic, and easier to process.

In some embodiments, the composition has a density between 1,00 g/cm³ and 1,15 g/cm³, between 1,01 g/cm³ and 1,15 g/cm³, between 1,02 g/cm³ and 1,15 g/cm³, between 1,05 g/cm³ and 1,15 g/cm³, density between 1,00 g/cm³ and 1,09 g/cm³, between 1,01 g/cm³ and 1,09 g/cm³, between 1,02 g/cm³ and 1,09 g/cm³, or between 1,05 g/cm³ and 1,09 g/cm³, including any range therebetween. Each possibility represents a separate embodiment of the present disclosure.

In some embodiments, the composition is an injectable composition. In some embodiments, the present disclosure is based in part, on the finding that compositions according to the present disclosure have a viscosity suitable for molding. In some embodiments, molding is injection molding.

In some embodiments, a composition according to the present disclosure in the form of a paste, can be stored before its use in injection molding process. In some embodiments, the composition can be stored (shelf life) between 2 days and 10 days, in a suspension under constant stirring. In some embodiments, the composition has a shelf life between 2 days and 10 days, between 2 days and 7 days, between 2 days and 5 days, between 2 days and 6 days, or between 2 days and 4 days, including any range therebetween. Each possibility represents a separate embodiment of the present disclosure.

In some embodiments, the biodegradable composition is a molding composition. In some embodiments, molding is injection molding. As used herein "molding composition" refers to a composition suitable to be used in injection molding. In some embodiments, suitable refers to compositions comprising the adequate consistency for injection, such consistency obtained by using a specific ratio of fiber:starch as disclosed herein. In some embodiments, suitable refers to compositions that are substantially stable under injection conditions such as injection pressure, temperature and injection time.

In some embodiments, the biodegradable composition is for use in injection molding process.

According to some embodiments, the present disclosure provides a use of the biodegradable composition described herein in food-, cosmetic-, medicine-, chemical-, or electronic-product packaging, or any combination thereof.

According to some embodiments, the present disclosure provides a method for obtaining the biodegradable composition described hereinabove, the method comprising: a) obtaining cellulose fibers from a cellulose containing material; and b) contacting the cellulose fibers with starch, in a ratio of fiber:starch from 5:1 to 1:2 by weight, thereby obtaining the biodegradable composition according to the present disclosure.

### Article

According to some embodiments, the present disclosure provides an article comprising the biodegradable composition described hereinabove.

In some embodiments, the article is biodegradable or bioerodible in soil, water, or both.

The present disclosure is based, in part, on the finding that articles as disclosed herein, are single-use articles (e.g. packaging), being an suitable alternative to single-use plastic articles, according to the single-use plastics directive [(EU) 2019/904].

In some embodiments, an article according to the present disclosure is substantially devoid of degradation within a predetermined time period, and subsequently is characterized by a burst degradation profile (after the predetermined time period). The terms sustained degradation and burst degradation are well-known in the art. In some embodiments, degradation of the article of the disclosure is induced by a trigger, such as soil or water. In some embodiments, the trigger comprises any one of electron donating specie (a reducing agent), pH (e.g. between 5 and 10), a metal chelator, and irrigation or any combination thereof. In some embodiments, the trigger is or comprises open field conditions, such as water, soil and/or area under cultivation, soil microbiome or a combination thereof.

In some embodiments, the article has a biodegradation rate between 2 weeks and 3 months, between 2 weeks and 2 months, between 3 weeks and 2 months, between 4 weeks and 1 month, between 3 weeks and 1 month, between 2 weeks and 1 month, or between 4 weeks and 3 weeks, including any range therebetween. Each possibility represents a separate embodiment of the present disclosure.

In some embodiments, the article of the disclosure is stable under open field/trigger conditions for a predetermined time period (e.g. between 2 days and 3 weeks). In some embodiments, the term "stable" refers to the capability of the article to retain at least 80%, at least 90%, at least 95%, at least 99% of the geometrical shape and/or mechanical properties thereof under open field/trigger conditions. Each possibility represents a separate embodiment of the present disclosure.

In some embodiments, the article of the disclosure is stable (e.g. substantially retains its shape, geometrical form and is substantially devoid of structural defects or cracks, disintegration) when exposed to a trigger, for a time period of between 1 day and 1 week, between 1 day and 10 days, or between 1 and 5 days, including any range between. Each possibility represents a separate embodiment of the present disclosure.

In some embodiments, at least 50%, at least 60%, at least 65%, at least 70%, at least 75%, at least 80%, at least 85%, at least 90%, at least 95%, or at least 98% w/w of the article is biodegradable. In some embodiments, the article gradually loses it structural intactness upon contact with soil and/or water within a time period of between 2 and 90 days (d), between 2 and 60 d, between 2 and 30 d, between 2 and 4 d, between 4 and 6 d, between 8 and 10 d, between 10 and 15 d, between 9 and 12 d between 12 and 15 d, including any range therebetween. Each possibility represents a separate embodiment of the present disclosure.

In some embodiments, the article of the disclosure is substantially devoid of openings, cracks, or other structural defects upon exposure to open field conditions for a predetermined time period described hereinabove. In some embodiments, the article is stable when it substantially retains its mechanical stability.

In some embodiments, the mechanical properties (e.g. strength and/or elasticity) of the article are reduced upon contact with water and/or soil.

In some embodiments, the degradation time of the article of the disclosure can be modified by controlling the chemical composition of the article (e.g. concertation of the starch in the mixture; concentration and ratio between starch and cellulose fiber). In some embodiments, the degradation time of the article of the disclosure can be modified by adjusting density and/or the dimensions of the article, such as wall thickness.

In some embodiments, the article is selected from the group comprising: a bottle, a container, a cap, a disposable medical equipment, and any combination thereof.

According to some embodiments, the present disclosure provides a use of the article according to the present disclosure, in food-, cosmetic-, medicine-, chemical-, or electronic-product packaging, or any combination thereof.

In some embodiments, the dimensions (e.g. height, width, cross-section, etc.) of the article are compatible (e.g. substantially equal or greater) with the dimensions of a product to be inserted thereon. In some embodiments, the dimensions and the volume of an inner lumen of the article are sufficient for receiving the product. In some embodiments, the dimensions and the volume of the inner lumen is adjusted to the geometrical shape and/or dimensions of the product.

In some embodiments, the article of the disclosure may be manufactured by shaping the composition described herein according to a predetermined geometrical shape and/or according to predetermined dimensions, thereby forming the article. In some embodiments, the method comprises shaping the composition according to a predetermined geometrical shape and/or according to predetermined dimensions. In some embodiments, shaping is or comprises molding. In some embodiments, molding comprises injection molding.

In some embodiments, the article may obtain any geometrical shape. In some embodiments, the article has a conical shape or a pyramidal shape. In some embodiments, the article has a cylindrical shape. In some embodiments, the article has a spherical or a semi-spherical shape. Non-limiting examples of optional geometrical shapes include but are not limited to: a cylinder, a sphere, a cube, a half cube, a pyramid, a cuboid, an inverse pyramid, a cone, a parallelepiped, etc. In some embodiments, the article has a bottle-like shape.

The present disclosure is based, in part, on the finding that an article according to the present disclosure comprises a homogeneous surface and color.

In some embodiments, the disclosed article is characterized by an improved one mechanical, thermal, physical, or chemical property, as compared to a reference article. In some embodiments, the term "reference article" refers to a same article, being free of the composition described herein.

By "improved property" it is meant to refer to having a more desirable mechanical, thermal, physical, or chemical property.

In some embodiments, the disclosed article is characterized by an improved mechanical property as compared to a reference article.

In some embodiments, the property is selected from, without being limited thereto, Young's modulus, tensile strength, fracture strain, yield point, toughness, abrasion resistance, stiffness, creep resistance, work-to-failure, stress and percentage of elongation.

Stiffness refers to the slope of the linear portion of a load-deformation curve. Work to failure refers to the area under the load-deformation curve before failure. Each of these can be measured and calculated by methods standard known in the art.

In some embodiments, the improved mechanical property refers to an elastic modulus. In some embodiments, the phrase "elastic modulus" refers to Young's modulus. In some embodiments, the phrase "elastic modulus" is determined by response of a material to application of tensile stress (e.g., according to procedures known in the art).

In some embodiments, the tensile strength of a material refers the maximum amount of tensile stress that it can take before failure, for example breaking.

In some embodiments, the term "tensile strength" as used herein is the maximum amount of force as measured e.g., in Newton's that a material can bear without or prior to tearing, breaking, necking forming microcracks or fractures. By "tearing, breaking, necking forming microcracks or fractures" it is meant to refer to a permanent deformation. In some embodiments, the term "permanent deformation" does not include microcracks or fractures. In some embodiments, by "permanent deformation" it is meant to refer to relative to at least 0.1%, 0.2%, 0.3%, 0.4%, 0.5%, or 1% of the original dimension or structure, including any value therebetween.

In some embodiments, the term "fracture strain" means the strain (displacement) at fracture, as determined e.g., by the stress-strain curve in a tensile test.

In some embodiments, the term "yield point" refers to the stress at which the stress-strain curve has a plateau and the elastic limit is reached. As used herein, "creep" is a measure of the change in tensile strain when a polymer sample is subjected to a constant tensile stress, for instance, gravity or applied mechanical or physical stress. Put differently, creep is the tendency of a solid material to slowly move or deform permanently under the influence of a constant tensile stress. As used herein, the term "creep resistance" refers to a polymer's ability to resist any kind of distortion when under a load over an extended period of time. "Improved creep resistance" may refer to improvement by e.g., 20 percent of the time to e.g., 5% tensile strain.

In some embodiments, the disclosed article comprising a composition as described herein, is stable upon exposure to pressure and/or temperature. In some embodiments, the composition is stable upon exposure to pressure and/or temperature.

In some embodiments, the article is stable at a temperature between -10 °C and 50 °C, between -5 °C and 50 °C, between 0 °C and 50 °C, between 10 °C and 50 °C, between -10 °C and 45°C, between -5 °C and 45 °C, between 0 °C and 45 °C, between 10 °C and 45 °C, between -10 °C and 40 °C, between -5 °C and 40 °C, between 0 °C and 40 °C, or between 10 °C and 40 °C, including any range therebetween. Each possibility represents a separate embodiment of the present disclosure.

As used herein, the term "stable" refers to the capability of the article and/or composition to maintain its structural and/or mechanical integrity. In some embodiments, the composition is referred to as stable, if the composition substantially maintains its structural and/or mechanical integrity under conditions of an industrial processes. In some embodiments, the stable composition is chemically inert to the conditions of an industrial process. The conditions of an industrial process may comprise parameters such as operable temperature, and pressure.

In some embodiments, the disclosed article maintains its shape under the conditions of an industrial process. In some embodiments, the disclosed article maintains its shape under the temperature and/or pressure conditions described herein. In some embodiments, the composition maintains its shape under the conditions of an industrial process. In some embodiments, the composition maintains its shape under the temperature and/or pressure conditions described herein. In some embodiments, the composition maintains at least at least 90%, at least 92%, at least 95%, at least 96%, at least 97%, at least 98%, or at least 99% of its shape under the conditions of an industrial process, including any value therebetween. In some embodiments, the article maintains at least 90%, at least 92%, at least 95%, at least 96%, at least 97%, at least 98%, or at least 99% of its shape under the conditions of an industrial process, including any value therebetween. In some embodiments, the composition maintains at least 90%, at least 92%, at least 95%, at least 96%, at least 97%, at least 98%, or at least 99% of its shape under the temperature and/or pressure conditions described herein, including any value therebetween. In some embodiments, the article maintains at least 90%, at least 92%, at least 95%, at least 96%, at least 97%, at least 98%, or at least 99% of its shape under the temperature and/or pressure conditions described herein, including any value therebetween.

In some embodiments, one or more properties selected from Young's modulus, tensile strength, is enhanced by e.g., at least 100%, at least 150%, at least 250%, at least 250%, at least 260%, at least 270%, at least 280%, at least 290%, at least 300%, at least 350%, at least 400%, at least 450%, at least 500%, at least 550%, at least 600%, at least 650%, at least 700%, at least 750%, at least 800%, at least 850%, at least 900%, at least 1000%, at least 1500%, at least 2000%, at least 2500%, or at least 3000% compared to a control, including any value therebetween.

### Method

According to some embodiments, the present disclosure provides a method for producing the article described hereinabove, the method comprising: i) providing a template comprising a wall defining a cavity; and ii) contacting the template with the biodegradable composition described hereinabove, so as to at least partially fill the cavity, thereby obtaining the article.

The present disclosure is based, in part, on the finding that an article can be custom-made according to the present method, by choosing the type of cellulose fiber, according to the desired use of the article.

In some embodiments, the contacting is performed at a temperature between 80 °C and 130 °C, 85 °C and 130 °C, 90 °C and 130 °C, 95 °C and 130 °C, between 80 °C and 125 °C, 85 °C and 125 °C, 90 °C and 125 °C, 95 °C and 125 °C, including any range therebetween. Each possibility represents a separate embodiment of the present disclosure. In some embodiments, the contacting is performed at a temperature suitable for the fiber not to decompose.

In some embodiments, the contacting is performed at a pressure between 5 bar and 10 bar, between 6 bar and 10 bar, between 5 bar and 9 bar, between 6 bar and 9 bar, between 5 bar and 8 bar, or between 6 bar and 8 bar, including any range therebetween. Each possibility represents a separate embodiment of the present disclosure.

In some embodiments, the contacting is carried out by casting, injection molding, extrusion, spinning, compression, blowing and/or thermoforming and/or any combination thereof.

In some embodiments, the contacting is injection molding, and the velocity and/or volume of delivery of the biodegradable composition is controlled.

In some embodiments, the injection time is between 1 s and 10 s, between 1 s and 7 s, between 1 s and 5 s, between 2 s and 10 s, between 2 s and 7 s, or between 2 s and 5 s, including any range therebetween. Each possibility represents a separate embodiment of the present disclosure.

In some embodiments, the cavity is at least partially filled with the composition described herein. In some embodiments, a shape of the article is at least partially predetermined by a shape of the wall.

As used herein, the terms "template" and "mold" are used interchangeably and refer to a frame, or an at least partially hollow container used to give shape to a material. In some embodiments, the template or mold comprises a cavity. In some embodiments, the template or mold comprises multiple cavities. In some embodiments, the template or mold comprises two complementary parts. In some embodiments, the two complementary parts comprise mold-separating surfaces that can be placed against each other. In some embodiments, the composition is places between the two mold-separating surfaces. In some embodiments, the mold is an aluminum mold.

As used herein, "cavity" refers to an inside space of a structure. In some embodiments, cavity is an at least partially hollow space within a structure. In some embodiments, cavity is a wall-defined space.

In some embodiments, the method further comprises releasing the article from the template.

It should be appreciated that in some embodiments of the present disclosure, certain features of the mold are variable and non-limiting and those skilled in the art could adapt the mold to achieve the desired final article.

### General

As used herein the term "about" refers to ± 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Various embodiments and aspects of the present disclosure as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### Materials and Methods

Ash content determination was performed using the standard method according to NP 3192 (calcination at 525 °C, 3h). Metal analysis was performed by ICP after digestion of ash obtained in acidic medium (HNO₃ +HF) in microwave. The FTIR spectrum was acquired with the Golden Gate ATR accessory SPECAC brand, in absorption mode with a resolution of 4cm⁻¹, in the range 4000-350 cm⁻¹ in a total of 256 scans. X-ray diffractograms were obtained by powder analysis, by the Bragg-Brentano method, in a Panalytical Empyrean equipment in the angular range from 4.0150° to 79.9610° with a step of 0.0260°. The solid-state ¹³C NMR spectrum was recorded on a Bruker Avance 400 spectrometer, where the sample was placed in a zirconium rotor sealed with Kel-FTM caps and rotated at 12 kHz. The acquisition parameters were as follows: ca. 7000 scans with 90° proton pulse, 1 ms cross polarization contact time and 2.5 s pulse delay. Elemental analysis was performed on a Truspec 630-200-200 instrument (LECO Corporation, St. Joseph, USA), in triplicate, in IR absorption detection mode for S, H and C and by thermal conductivity for N Neutral sugars were analyzed by GC as alditol acetates (Varian 3350 gas chromatograph equipped with FID detector (260°C) and DB-225 J&W column), under the following conditions: initial temperature - 220°C (5 min); temperature gradient of 10°C / min; final temperature - 240°C (6 min). The determination of amylose and amylopectin was performed colorimetrically based on the formation of the iodine-starch complex.

### EXAMPLE 1

### PROCESS FOR OBTAINING BIODEGRADABLE COMPOSITIONS

According to the present disclosure, in the initial process, the fibers, cellulosic sludge and/or forest residues are crushed and homogenized.

Mixers (e.g. industrial mixers) are used for the process of preparation and production of the final raw materials, in a uniform mixture, with unique properties of biodegradability, ecology and compostability.

After weighing, the fiber (virgin or cellulosic sludge) is placed in the mixer under continuous stirring. After, the other components (starch, dye, water, Kaolin, ground clay, etc.) are added to the mixer, according to the different Formulas. The Mixer is in permanent stirring so that the components are mixed, until the paste is with the desired consistency and color is obtained. The time for this process is about 30 minutes.

The compositions or final liquefied pastes are then transferred from the mixers to deposits. This transfer can be performed through an automated system using peristaltic pumps.

The final compositions (liquefied pastes) are submitted to a thermal molding production process. The deposits are be coupled to thermal pressing machines, and the various industrial parameters are introduced (according to the desired product/packaging), thereby generating the production of the previously programmed packaging.

Figures 1A-B present an exemplary package comprising the presented formulas and produced according to the presented methods. Figures 1A-B present a sustainable single-use packaging to store glass sealed ampules.

Exemplary heat press device and method according to the present disclosure comprises the following characteristics:
- reinforced metal structure;
- opening of molding fixing plates of 500mm;
- equipment operation controller, distribution of composition in channels and injection, and thermal molding of composition;
- mechanical pressing force of 30 TON;
- area for DIM Mold: 500x500x400mm;
- maximum mold weight 600kgs;
- maximum mold weight on the mobile table 600kgs;
- average mechanical cycle (molding cycle) speed: 20-35 sec;
- product outlet under the mold, for a transport mat;
- exhaust system for vapors (motorization);
- sliding doors with security system and certification C;
- switchboard;
- Siemens controller - 16 functions command: e.g. mechanical closing/opening cycle, temperature and resistances, pressure, sensor control, composition distribution and introduction, parts count, among others.

### EXAMPLE 2

### EXEMPLARY BIODEGRADABLE COMPOSITIONS

According to the present disclosure, different biodegradable compositions were prepared. Exemplary compositions 1-3 are presents in Table 1. Compositions 1-3 were successfully used in injection molding process.

**Table 1. Exemplary compositions**

| | Composition 1 | Composition 2 | Composition 3 |
|---|---|---|---|
| Virgin fiber | 60 g | - | - |
| Cellulosic sludge | - | 40 g | 40 g |
| Lignocellulosic biomass | - | - | 40 g |
| Starch | 40 g | 40 g | 20 g |
| Kaolinite | - | 20 g | 20 g |
| water | 350 g | 60 g | 90 g |

### EXAMPLE 3

### CHARACTERIZATION OF THE BIODEGRADABLE COMPOSITIONS

According to the present disclosure, a sample of an article comprising a composition comprising virgin fiber and starch was analyzed for its ash content (Table 2).

**Table 2. Sample ash content (average value of three determinations)**

| Mass (g) | Ash content (g) | Ash, % |
|---|---|---|
| 2.7222 ± 0.1125 | 0.1400 ± 0.0058 | 5.14 ± 0.20 |

The ash was analyzed to determine the metal content after its digestion by microwave in an acid medium (HNO₃ + HF), whose abundances are found in Table 3 and Table 4.

**Table 3. ICP metal analyses of the sample**

| Metal | Unit | Sample content |
|---|---|---|
| Na | g/kg | 1,2 |
| Al | g/kg | 4,8 |
| Si | g/kg | 3,2 |
| Ca | g/kg | 4,3 |
| Ti | g/kg | 9,2 |
| Zr | g/kg | 1,0 |
| Mg | g/kg | 0,16 |
| P | g/kg | 0,46 |
| K | g/kg | 0,73 |
| Fe | g/kg | 0,14 |
| Li | mg/kg | 0,95 |
| Ba | mg/kg | 0,50 |
| V | mg/kg | 1,7 |
| Cr | mg/kg | 4,9 |
| Mn | mg/kg | 1,4 |
| Co | mg/kg | 0,35 |
| Ni | mg/kg | 1,1 |
| Cu | mg/kg | 7,9 |
| Zn | mg/kg | 12 |
| Rb | mg/kg | 0,43 |
| Sr | mg/kg | 1,4 |
| Ba | mg/kg | 2,0 |
| Hf | mg/kg | 27 |
| Pb | mg/kg | 0,80 |

**Table 4. - ICP metal analyses of the ashes (525 °C) of the sample.**

| | Si g/Kg | Ti g/Kg | K g/Kg | Na g/Kg | Al g/Kg | Ca g/Kg |
|---|---|---|---|---|---|---|
| Sample content | 57 | 205 | 14 | 23 | 63 | 13 |

The sugar contents were analyzed by GC as alditol acetates and presented the values shown in Table 5.

**Table 5. Relative content of sugars found in the composition of the sample.**

| Sugar | Relative amount (mol. %) |
|---|---|
| Glucose | 98,1 ± 0,4 |
| Xilose | 1,9 ± 0,3 |
| Manose | trace s |
| Galactose | trace s |
| Arabinose | - |
| Ramnose | - |

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. Biodegradable composition comprising cellulose fiber and starch, in a ratio of fiber:starch between 5:1 and 1:2 by weight, wherein:
- said cellulose fiber is virgin fiber, lignocellulosic biomass, organic residues, primary sludge, or any combination thereof, and
- said starch is wheat, rice, corn, potato, cassava, or any combination thereof.

2. Biodegradable composition according to claim 1, comprising between 10% and 60% weight per weight (w/w) of said starch.

3. Biodegradable composition according to claim 1 or 2, comprising between 20% and 90% (w/w) of said cellulose fiber.

4. Biodegradable composition according to any one of claims 1 to 3, comprising an ash content between 4% and 30% (w/w).

5. Biodegradable composition according to any one of claims 1 to 4, further comprising between 5% and 30% (w/w) of an aluminum silicate.

6. Biodegradable composition according to any one of claims 1 to 5, further comprising between 5% and 30% (w/w) of titanium dioxide.

7. Biodegradable composition according to any one of claims 1 to 6, further comprising between 0.5% and 10% (w/w) of calcium carbonate.

8. Biodegradable composition according to any one of claims 1 to 7, further comprising a natural additive selected from the group consisting of: a coloring agent, a filler, a release agent, a binder, and any combination thereof.

9. Biodegradable composition according to any one of claims 1 to 8, further comprising between 10% and 40% (w/w) of water.

10. Article comprising the biodegradable composition according to any one of claims 1 to 9, wherein said article has a biodegradation rate between 2 weeks and 3 months and is biodegradable or bioerodible in soil, water, or both.

11. Article according to claim 10, wherein said article is a single-use article selected from the group comprising: a bottle, a container, a package, a cap, a disposable medical equipment, and any combination thereof.

12. Method for producing the article according to claim 10 or 11, the method comprising:
a) providing a template comprising a wall defining a cavity, wherein a shape of said article is at least partially predetermined by a shape of said wall;
b) contacting said template with the biodegradable composition according to any one of claims 1 to 9, so as to at least partially fill said cavity, wherein said contacting is carried out by casting, injection molding, extrusion, spinning, compression, blowing and/or thermoforming and/or any combination thereof,
thereby obtaining said article.

13. Method according to claim 12, wherein said contacting is injection molding performed at a temperature between 80 °C and 130 °C, and at a pressure between 5 bar and 10 bar.

14. Use of the biodegradable composition according to any one of claims 1 to 9, in food, cosmetic, medicine, chemical-, or electronic-product packaging, or any combination thereof.

15. Use of the article according to any one of claims 10 or 11, in food-, cosmetic-, medicine-, chemical-, or electronic-product packaging, or any combination thereof.
